# EUROPEAN PATENT APPLICATION

(11) **EP 4 070 934 A1**
(43) Date of publication of application: **12.10.2022**
(21) Application number: 21167198.7
(22) Date of filing: 07.04.2021
(51) Int. Cl.: B29C 64/118, B29C 64/40, B33Y 10/00, B33Y 30/00, B33Y 80/00

(54) **EXTRUSION-BASED ADDITIVE MANUFACTURING: METHOD, 3D PRINTING SYSTEM AND 3D PART**

(71) Applicant: Bond High Performance 3D Technology B.V., 7521 PK Enschede (NL)
(72) Inventor: Voss, Kevin Hendrik Jozef, 7521 PK Enschede (NL)
(74) Representative: Renkema, Jaap

(57) **Abstract**

The invention relates to a method (10) for preventing detachment of a 3D part (1) from a build plate (2) of a 3D printing system (20) for fabricating the 3D part using an extrusion-based additive manufacturing process. The method comprises providing an intermediate structure (3) on top of the build plate, the intermediate structure having a surface that is larger than a print area required for printing the 3D part on top of the intermediate structure, and printing tracks of extruded feedstock material to fabricate the 3D part and at least one auxiliary structure (4) that is arranged next to the 3D part for preventing detachment of the 3D part from the build plate.

The invention also relates to a 3D printing system for performing the method according to the invention, and a 3D part fabricated using an extrusion-based additive manufacturing process performed by said 3D printing system.

## Description

### FIELD OF THE INVENTION

The present invention relates to a method for preventing detachment of a three-dimensional, 3D, part from a build plate of a 3D printing system that is configured and arranged to fabricate a 3D part using an extrusion-based additive manufacturing process. The invention also relates to a 3D printing system adapted to perform the method according to the invention and a 3D part fabricated using said 3D printing system.

### BACKGROUND OF THE INVENTION

In 3D printing using an extrusion-based additive manufacturing process, 3D parts are formed by layering extruded AM feedstock material in a controlled manner such that a desired 3D part can be created. Commonly, a 3D printing system is used that comprises a printhead that is moveable in a 3D space with respect to a build surface while dispensing AM feedstock material on at least one of the build surface and on previously deposited tracks of the AM feedstock material that are supported by the build surface. However, various options are available for moving the printhead and the build surface on which the 3D part is printed relative to each other.

The 3D printing system comprises a control system that is configured to control a controllable positioning system to which the printhead is attached for controlling movements of the printhead. By means of software a pattern of toolpaths can be generated, which pattern is used for moving the printhead and for depositing the tracks of extruded AM feedstock material.

The 3D part is created on the build surface in a reference location relative to the movable printhead. The AM feedstock material can be fused with previously deposited tracks. The AM feedstock material can be fed into the printhead in the form of for example filament, granulate, rod, liquid, resin or a suspension. The AM feedstock material can be any suitable polymer-based material such as for example PAEK.

In case that the AM feedstock material is fed into the printhead in a solid form, a liquefying unit is used to melt the AM feedstock material and allow deposition via a nozzle on the build surface in the form of tracks forming a layer of tracks, or when a previous layer of the 3D part to be created has been deposited, on previously deposited tracks where it is allowed to solidify after the deposition. The AM feedstock material can be thermally or chemically or otherwise fused with the previously deposited tracks.

The relative motion of the build surface and the 3D part supported by it with respect to the printhead along tracks and the simultaneous deposition of AM feedstock material from the printhead allow the 3D part to be built up and to gradually attain its desired shape with each consecutively deposited track of AM feedstock material.

Especially extrusion-based AM printing of high-performance 3D parts that are to be used in critical applications in for example the medical, automotive, or aerospace domain, should have amongst others excellent mechanical properties, such as a high tensile strength, aesthetic properties, and precise dimensions. Failure to manufacture at least a sufficient number of 3D parts that have the required properties enabling them to be applied in critical applications in at least one of the above-mentioned technical domains, has a negative effect on production yield. Consequently, this can have a negative effect on the costs of the printed 3D parts and can give rise to significant related financial damage.

Based on the above, there is a need to provide a method and a 3D printing system adapted to perform said method for fabricating as many 3D parts as possible that meet the desired requirements, thereby allowing an improvement of the production yield of high-performance 3D printed parts having at least one of the above-mentioned properties. In addition, the method and the 3D printing system adapted to perform said method should be able to allow the costs of the 3D printed parts to be reduced, thereby allowing financial gain to be increased.

### SUMMARY OF THE INVENTION

It is an object of the present invention to provide a method for improving the production yield of high-performance 3D parts by preventing detachment of a 3D part from a build plate of a 3D printing system that is configured and arranged to fabricate the 3D part using an extrusion-based additive manufacturing process. Said method can pre-empt or at least reduce at least one of the above-mentioned disadvantages and/or other disadvantages associated with fabricating high-performance 3D parts using extrusion-based additive manufacturing printing processes known in the art.

It is another object of the present invention to provide a 3D printing system that is configured and arranged to perform the method according to the invention, thereby allowing an improvement of the production yield of the 3D parts obtained.

It is also an object of the present invention to provide a 3D part that is fabricated using an extrusion-based additive manufacturing process that is performed using a 3D printing system that is configured and arranged to perform the method according to the invention.

Aspects of the present invention are set out in the accompanying independent and dependent claims. Features from the dependent claims may be combined with features from the independent claim as appropriate and not merely as explicitly set out in the claims. Furthermore, all features may be replaced with other technically equivalent features.

At least one of the abovementioned objects is achieved by providing a method for preventing detachment of a 3D part from a build plate of a 3D printing system that is configured and arranged to fabricate the 3D part using an extrusion-based additive manufacturing process, the method comprising:
- providing an intermediate structure on top of the build plate, the intermediate structure being configured to have a surface that is larger than a print area that is required to print the 3D part on top of the intermediate structure;
- printing tracks of extruded feedstock material to fabricate the 3D part and at least one auxiliary structure that is arranged next to the 3D part and configured to prevent detachment of the 3D part from the build plate.

The person skilled in the art will appreciate that detachment of printed layers of feedstock material and the resulting warpage of the printed 3D parts is caused by limited adhesion of the printed layers of feedstock material to the surface of the build plate. This problem is more paramount if 3D parts are to be printed that require a larger print area, i.e. an area of the build plate that is in contact with a first layer of deposited tracks of feedstock material, and/or if 3D parts are to be printed using feedstock material that exhibits a relatively large shrink as it cools down from the extrusion temperature of the feedstock material to the temperature it obtains during printing.

Due to the detachment of printed layers of feedstock material from the build plate and the resulting warpage of the printed 3D parts, production yield of, in particular, printed high-performance 3D parts is reduced because of for example a sub-optimal flatness of the bottom parts of the printed 3D parts and imprecise dimensions of the printed 3D parts. Furthermore, the detachment of printed layers of feedstock material from the build plate and the resulting warpage of the printed 3D parts causes the 3D printing process to have a sub-optimal reliability. For example, failure of a print job can be caused due to undesired contact between the print head and warped previously deposited layers of a 3D part.

By applying the above-defined method according to the invention, detachment of the 3D part from the build plate of the 3D printing system and therefore warpage of the printed 3D part can be prevented. The at least one auxiliary structure that is arranged next to the 3D part can warp up from the build plate, but it is not a problem if this happens, because after the print job has ended, the at least one auxiliary structure will be discarded as well as at least the part of the intermediate structure outside the printing area of the 3D part.

In an exemplary, non-limiting embodiment of the method according to the invention, the at least one auxiliary structure can be arranged as a single structure that completely envelops the desired 3D part.

Based on the above, the person skilled in the art will appreciate that the method according to the present invention allows an improvement of the production yield of high-performance 3D printed parts and an improvement of the reliability of the additive manufacturing 3D printing process. As a result, the method according to the present invention can allow the costs of the 3D printed parts to be reduced, thereby allowing financial gain to be increased.

In an embodiment of the method according to the invention, the method comprises printing a set of auxiliary structures around the 3D part, wherein at least one auxiliary structure of said set has an elongated shape and a longitudinal center line, the at least one elongated auxiliary structure being arranged such that the longitudinal center line is arranged at a non-zero angle with respect to an adjacent side surface of the 3D part.

The person skilled in the art will appreciate that depending on a design of the actual 3D part that is to be printed, any suitable arrangement and any suitable number of elongated auxiliary structures that complies with the above-defined arrangement with respect to the 3D part can be envisaged for obtaining an optimal result, i.e. preventing detachment of the 3D part from the build plate and consequently preventing warpage of the 3D part.

In an embodiment of the method according to the invention, the method comprises printing the at least one elongated auxiliary structure of said set such that the at least one elongated auxiliary structure is arranged at a respective predefined first distance from the 3D part and at a respective predefined second distance from an edge of the intermediate structure.

The person skilled in the art will appreciate that the predefined first distance and the predefined second distance can have any suitable value including zero. The actual values for the predefined first distance and the predefined second distance can be chosen depending on the design of the actual 3D part that is to be printed and can be equal or unequal. In the event that the predefined first distance is equal to zero, the at least one elongated auxiliary structure is arranged in contact with the 3D part. In the event that the predefined second distance is equal to zero, the at least one elongated auxiliary structure is arranged to extend until the edge of the intermediate structure.

In an embodiment of the method according to the invention, the respective predefined first distance and the respective predefined second distance are non-zero.

The person skilled in the art will appreciate that the predefined first distance and the predefined second distance of the at least one elongated auxiliary structure of said set can have any suitable value that is non-zero. The actual non-zero values for the predefined first distance and the predefined second distance can be chosen depending on the design of the actual 3D part that is to be printed and can be equal or unequal. In this case, the at least one elongated auxiliary structure of said set is arranged to be not in contact with the 3D part and not to extend until the edge of the intermediate structure.

In an embodiment of the method according to the invention, if said set comprises more than one elongated auxiliary structure, at least one of the respective predefined first distance and the respective predefined second distance regarding at least one of the elongated auxiliary structures of said set is different from at least one of the respective predefined first distances and the respective predefined second distances regarding at least one other elongated auxiliary structure of said set.

The person skilled in the art will appreciate that although the predefined first distance and the predefined second distance of the elongated auxiliary structures of said set can have any suitable value including zero, in this case the elongated auxiliary structures of said set are not all arranged in the same way with respect to at least one of the 3D part and the edge of the intermediate structure. The actual arrangement of the elongated auxiliary structures of said set can be chosen depending on the design of the actual 3D part that is to be printed.

In an embodiment of the method according to the invention, the at least one elongated auxiliary structure has a height in a range from 10mm to 25mm.

The person skilled in the art will appreciate that there are various reasons for the detachment of printed layers of feedstock material and the resulting warpage of the printed 3D parts, the most important being shrink of the printed feedstock material as it cools down from the extrusion temperature of the feedstock material to the temperature it obtains during printing. The person skilled in the art will appreciate that for feedstock material with thermal phase change the extrusion temperature typically is above the melt temperature, whereas for feedstock material that hardens after deposition upon being subjected to a drying process or as a result of a chemical reaction, the extrusion temperature will not be above the melt temperature.

The first deposited layer of feedstock material adheres to the build plate or to the intermediate structure that is arranged on top of the build plate and therefore typically cannot shrink. Upon printing the second layer of feedstock material on top of the first layer of feedstock material it cools down from the extrusion temperature to the temperature of the build plate. Due to the cooling down of the feedstock material of the second layer, the specific density of the feedstock material increases. As a result, an in-plane tensile stress builds up in the second layer of feedstock material that exposes the underlying first layer of feedstock material to an inline compressive stress. Together, this yields an upwards bending moment, i.e. a bending moment in a direction facing away from the build plate.

Each subsequent printed layer of feedstock material will increase the aforementioned bending moment. However, as the package of printed layers of feedstock material gradually becomes thicker, the relative relevance of the top most printed layer of feedstock material gradually decreases.

The person skilled in the art will appreciate that the above-mentioned upwards bending moment results in an upwards bending force, i.e. a force in a direction facing away from the build plate, that acts on the outer edges of the 3D part to be printed. If the upwards bending force exceeds the adhesion force between the first printed layer of feedstock material of the 3D part and the build plate, the printed 3D part detaches or peels off from the build plate and warps up, i.e. in a direction facing away from the build plate. This typically occurs at corners and outer edges of the 3D part.

If the printed 3D part has obtained a certain height, the 3D part has become rigid enough and the above-mentioned upwards bending moment no longer increases significantly. If the above-mentioned adhesion force initially is high enough to compensate the upwards bending force, the risk of detachment of the 3D part from the build plate becomes less and eventually disappears if the 3D part has reached a certain height, typically in a range from 10mm to 25mm. Therefore, in order to reduce the amount of feedstock material that is used for printing the at least one auxiliary structure, the at least one auxiliary structure does not need to have a height higher than 25mm. In accordance with the above-defined embodiment of the method of the present invention, the at least one auxiliary structure can have a height in a range from 10mm to 25mm.

In an embodiment of the method according to the invention, the at least one elongated auxiliary structure of said set has a dimension in a direction perpendicular to the longitudinal center line of the at least one elongated auxiliary structure and parallel to the build plate that is in a range from 2mm to 10mm.

The person skilled in the art will appreciate that the dimension of the at least one elongated auxiliary structure in a direction perpendicular to its longitudinal center line and parallel to the build plate, i.e. the width of the at least one elongated auxiliary structure, can have any suitable value chosen from the above-mentioned range. The actual value can be chosen depending on the actual design of the 3D part to be printed.

In an embodiment of the method according to the invention, providing an intermediate structure on top of the build plate comprises printing tracks of extruded feedstock material to fabricate the intermediate structure on top of the build plate.

The person skilled in the art will appreciate that the printed intermediate structure can be a structure typically referred to as a brim, a raft or a carpet. The intermediate structure can have any suitable thickness. It can be a sheet-like or thin structure but it can also be a plate-like or thick structure.

In an embodiment of the method according to the invention, providing an intermediate structure on top of the build plate comprises attaching a pre-processed intermediate structure on top of the build plate.

The person skilled in the art will appreciate that the pre-processed intermediate structure can be attached to the build plate in any suitable way, for example by using at least one of a vacuum platen, a magnetic force, mechanical fastening elements such as form example clamps or screws or any suitable type of form-locks for that matter.

In addition, the person skilled in the art will appreciate that any one of the printed or pre-processed intermediate structures, the at least one auxiliary structure and the 3D part can comprise feedstock material comprising a material selected from polyaryletherketones (PAEK), polyphenylsulfides, polyamide-imide, polyethersulfon, polyetherimide, polysulfon, polyphenylsulfon, polycarbonates (PC), poly(acrylonitrile butadiene styrene) (ABS), polymethylmethacrylate (PMMA), polyethyleneterephtalate (PET), polystryrene (PS), acrylonitrilstyrene acrylate, polypropylene (PP), polylactic acid (PLA), polyvinylalcohol (PVA), polyethylene (PE), polyoxymethylene, polyurethane (PU), copolymers of polyvinylalcohol and butenediolvinylalcohol (BVOH) and mixtures thereof, optionally filled with inorganic or organic fillers.

Moreover, the person skilled in the art will appreciate that the at least one auxiliary structure can also be printed using a support material that can be soluble, for example water-soluble. Furthermore, the at least one auxiliary structure can be printed with less than 100% infill.

In an embodiment of the method according to the invention, the at least one auxiliary structure has an open or closed shape.

The person skilled in the art will appreciate that depending on the design of the 3D part, the suitable shape for the at least one auxiliary structure can be chosen.

In an embodiment of the method according to the invention, the at least one auxiliary structure is either one of a completely solid structure, a hollow structure or a structure provided with a predefined filling pattern.

The person skilled in the art will appreciate that depending on the design of the 3D part, a suitable internal configuration of the at least one auxiliary structure can be chosen.

According to another aspect of the present invention, a 3D printing system is provided that is configured and arranged to fabricate a 3D part using an extrusion-based additive manufacturing process, the 3D printing system being operatively connected with a processing unit that is provided with computer instructions which, if executed in the processing unit, perform the method according to the invention.

The person skilled in the art will appreciate that the processing unit that is operatively connected with the 3D printing system can be part of a pre-processing unit such as a slicer unit that can be located at a remote location with respect to the 3D printing system.

Furthermore, the person skilled in the art will appreciate that the computer instructions provided to the processing unit can be configured to automatically determine at least one of a suitable number of auxiliary structures, a suitable shape and internal configuration of the auxiliary structures, and a suitable location for arranging the auxiliary structures with respect to the desired 3D part. The computer instructions can also be configured to allow a user to adjust at least one of the number, the shape, the internal configuration and the location of the auxiliary structures that have been automatically determined by executing the computer instructions in the processing unit. It is also possible that the computer instructions provided to the processing unit allow the user to determine at least one of a suitable number of auxiliary structures, a suitable shape and internal configuration of the auxiliary structures, and a suitable location for arranging the auxiliary structures with respect to the desired 3D part.

In an embodiment of the 3D printing system according to the invention, the processing unit is integrated within the 3D printing system. In this way, the processing unit is not located at a remote location with respect to the 3D printing system but part of the 3D printing system.

According to yet another aspect of the present invention, a 3D part is provided that is fabricated using an extrusion-based additive manufacturing process that is performed using a 3D printing system according to the invention.

The person skilled in the art will appreciate that 3D parts, which are fabricated using an extrusion-based additive manufacturing process executed by a 3D printing system according to the invention that is adapted to perform the method according to the invention, can meet the requirements, such as for example excellent mechanical properties, excellent aesthetic properties, and accurate dimensions, that enable them to be classified as high-performance 3D parts that can be applied in critical applications in for example at least one of the medical, automotive, and aerospace domains.

### BRIEF DESCRIPTION OF THE DRAWINGS

Further features and advantages of the invention will become apparent from the description of the invention by way of exemplary and non-limiting embodiments of a 3D part that is fabricated using the method according to the invention and of a 3D printing system according to the invention.

The person skilled in the art will appreciate that the described embodiments of the 3D part fabricated using the method and the 3D printing system according to the present invention are exemplary in nature only and not to be construed as limiting the scope of protection in any way. The person skilled in the art will realize that alternatives and equivalent embodiments of the 3D part fabricated using the method and the 3D printing system can be conceived and reduced to practice without departing from the scope of protection of the present invention.

Reference will be made to the figures on the accompanying drawing sheets. The figures are schematic in nature and therefore not necessarily drawn to scale. Furthermore, equal reference numerals denote equal or similar parts. On the attached drawing sheets,
figure 1 shows a schematic isometric view of a first exemplary, non-limiting embodiment of a 3D part and a first exemplary non-limiting embodiment of a set of elongated auxiliary structures that have been printed on a first exemplary, non-limiting embodiment of an intermediate structure in accordance with the method of the invention;
figure 2 shows a schematic top view of a part of the first exemplary, non-limiting embodiments of the 3D part, the elongated auxiliary structures and the intermediate structure shown in figure 1, wherein the elongated auxiliary structures are arranged at a non-zero predefined first distance from the 3D part and at a predefined non-zero second distance from the edge of the intermediate structure;
figure 3 shows a schematic top view of a part of the first exemplary, non-limiting embodiments of the 3D part, the elongated auxiliary structures and the intermediate structure, wherein the predefined first distance is zero, i.e. the elongated auxiliary structures are arranged in contact with the 3D part, and the predefined second distance is non-zero;
figure 4 shows a flow diagram of a first exemplary, non-limiting embodiment of the method according to the invention;
figure 5 shows a flow diagram of a second exemplary, non-limiting embodiment of the method according to the invention; and
figure 6 shows a schematic representation of an exemplary, non-limiting embodiment of the 3D printing system according to the present invention that is adapted to perform the method according to the invention.

### DETAILED DESCRIPTION OF EMBODIMENTS

The invention will be further elucidated in exemplary embodiments thereof as described below. It is noted that although all exemplary, non-limiting embodiments shown in the figures relate to elongated auxiliary structures, the advantages of the present invention can be achieved with auxiliary structures having any suitable shape that allows them to prevent detachment of the 3D part from the build plate and therefore prevent warpage of the printed 3D part.

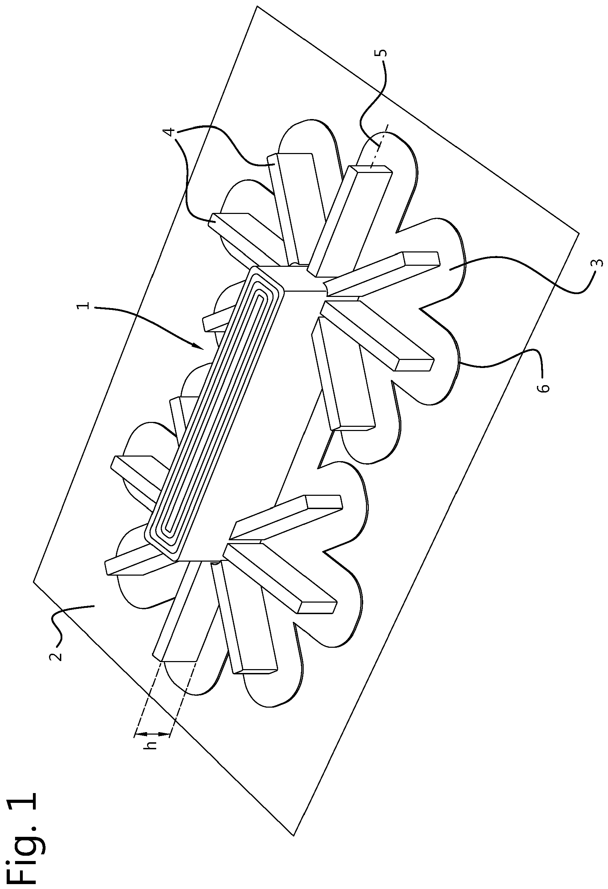

Figure 1 shows a schematic isometric view of a first exemplary, non-limiting embodiment of a 3D part 1 and a first exemplary non-limiting embodiment of a set of elongated auxiliary structures 4 that have been printed on a first exemplary, non-limiting embodiment of an intermediate structure 3 in accordance with the method 10 of the invention that comprises providing 11a, 11b the intermediate structure 3 on top of a build plate 2 of a 3D printing system 20.

The intermediate structure 3 has a surface that is larger than a print area that is required to print the 3D part 1 on top of the intermediate structure 3. In accordance with the first exemplary, non-limiting embodiment of the intermediate structure 3 shown in figure 1, the intermediate structure 3 has a flower-like shape. However, the person skilled in the art will appreciate that the intermediate structure 3 can have any suitable shape.

In accordance with the method 10 of the invention, tracks of extruded feedstock material are printed on top of the intermediate structure 3 to fabricate the 3D part 1 and at least one auxiliary structure 4 that is arranged next to the 3D part 1. In accordance with the first exemplary, non-limiting embodiment of the auxiliary structures 4 shown in figure 1, the auxiliary structures 4 have an elongated shape, in this case a bar-shape. However, the person skilled in the art will appreciate that the elongated auxiliary structures can have any suitable shape.

The elongated auxiliary structures 4 shown in figure 1 prevent detachment of the 3D part 1 from the build plate 2 and therefore warpage of the printed 3D part 1 can be prevented. The elongated auxiliary structures 4 can warp up from the build plate 2, but it is not a problem if this happens, because after the print job has ended, the elongated auxiliary structures 4 will be discarded as well as at least the part of the intermediate structure 3 outside the printing area of the 3D part 1.

It is noted that in figures 1, 2, 3 and 6 for the sake of clarity of the drawings, individual tracks of deposited feedstock material have been schematically indicated only for the top surface of the 3D part 1. The person skilled in the art will appreciate that the other outer surfaces of the 3D part 1 as well as the outer surfaces of the elongated auxiliary structures 4 look similar. Furthermore, it will be clear that at least for the sake of aesthetics of the 3D part 1 the surface roughness of the outer surfaces preferably is as low as possible.

Figures 1, 2 and 3 show that each elongated auxiliary structure 4 is arranged with respect to a respective adjacent side surface of the 3D part 1 such that a longitudinal center line 5 of the respective elongated auxiliary structure 4 is arranged at a non-zero angle with respect to the respective adjacent side surface of the 3D part 1. In accordance with this arrangement of the elongated auxiliary structures 4 with respect to the desired 3D part 1, the elongated auxiliary structures 4 can effectively prevent detachment of the 3D part 1 from the build plate 2 and consequently can prevent warpage of the 3D part 1.

The person skilled in the art will appreciate that depending on a design of the actual 3D part 1 that is to be printed, any suitable arrangement of the elongated auxiliary structures 4 that complies with the above-defined arrangement of the elongated auxiliary structures 4 with respect to the 3D part 1 can be envisaged for obtaining an optimal result, i.e. preventing detachment of the 3D part 1 from the build plate 2 and consequently preventing warpage of the 3D part 1.

As explained above, if the printed 3D part 1 has obtained a certain height, the 3D part 1 has become rigid enough and the upwards bending moment on the deposited layers of feedstock material no longer significantly increases. Therefore, if the above-mentioned adhesion force initially is high enough to compensate the upwards bending force, the risk of detachment of the 3D part 1 from the build plate 2 becomes less and eventually disappears if the 3D part 1 has reached a certain height, typically in a range from 10mm to 25mm. Therefore, in order to reduce the amount of feedstock material that is used for printing the elongated auxiliary structures 4, they do not need to have a height, *h,* higher than 25mm. The height, *h,* of the elongated auxiliary structures 4 can have a value in a range from 10mm to 25mm.

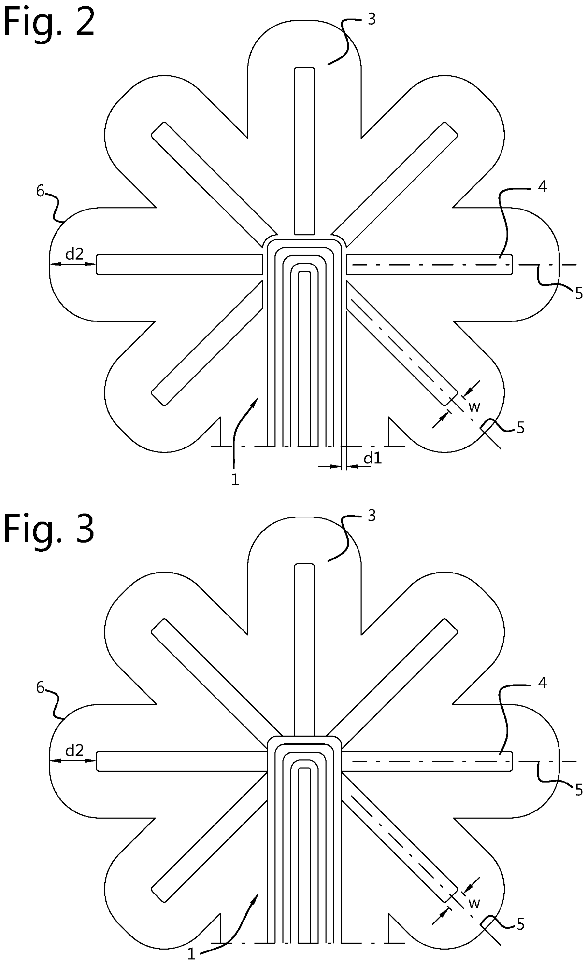

Figure 2 shows a schematic top view of a part of the first exemplary, non-limiting embodiments of the 3D part 1, the elongated auxiliary structures 4 and the intermediate structure 3 shown in figure 1. The elongated auxiliary structures 4 are arranged at a non-zero predefined first distance, *d1,* from the 3D part 1 and at a predefined non-zero second distance, *d2,* from an edge 6 of the intermediate structure 3.

The person skilled in the art will appreciate that the predefined first distance, *d1,* and the predefined second distance, *d2,* can have any suitable value including zero. The actual values for the predefined first distance, *d1,* and the predefined second distance, *d2,* can be chosen depending on the design of the actual 3D part 1 that is to be printed and can be equal or unequal.

Figure 3 shows a schematic top view of a part of the first exemplary, non-limiting embodiments of the 3D part 1, the elongated auxiliary structures 4 and the intermediate structure 3, wherein the predefined first distance, *d1,* is zero. In this case, the elongated auxiliary structures 4 are arranged in contact with the 3D part 1. The person skilled in the art will appreciate that if the elongated auxiliary structures are arranged to be in contact with the 3D part 1, removal of the elongated auxiliary structures 4 after the print job has ended can be more involving.

Although the predefined second distance, *d2,* between the elongated auxiliary structures 4 and the edge 6 of the intermediate structure 3 as shown in figure 3 is non-zero, the person skilled in the art will appreciate that in accordance with another exemplary, non-limiting embodiment, the predefined second distance, *d2,* can be zero. In such event, the elongated auxiliary structures 4 are arranged to extend until the edge 6 of the intermediate structure 3.

Based on the above, the person skilled in the art will appreciate that any suitable arrangement of the elongated auxiliary structures 4 and any suitable values for the predefined first distance, *d1,* and the predefined second distance, *d2,* can be envisaged depending on the design of the actual 3D part that is to be printed.

Figures 2 and 3 show that the elongated auxiliary structures 4 have a dimension, *w,* in a direction perpendicular to the longitudinal center line 5 and parallel to the build plate 2. This dimension that can be referred to as the width of the elongated auxiliary structures 4 can be in a range from 2mm to 10mm. The actual value for the width, *w,* can be chosen depending on the actual design of the 3D part to be printed.

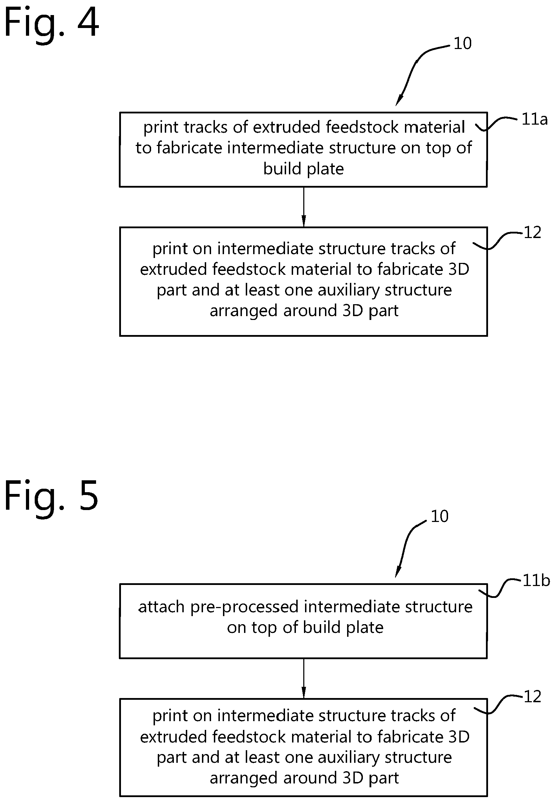

Figure 4 shows a flow diagram of a first exemplary, non-limiting embodiment of the method 10 according to the invention, wherein the step of providing the intermediate structure 3 on top of the build plate 2 comprises printing 11a tracks of extruded feedstock material to fabricate the intermediate structure 3. The person skilled in the art will appreciate that the printed intermediate structure 3 can be a structure typically referred to as a brim, a raft or a carpet.

In accordance with a next step 12 of the flow diagram shown in figure 4, tracks of extruded feedstock material are printed on the printed intermediate structure 3 to fabricate the 3D part 1 and at least one auxiliary structure 4 arranged around the 3D part 1.

Figure 5 shows a flow diagram of a second exemplary, non-limiting embodiment of the method 10 according to the invention, wherein providing the intermediate structure 3 on top of the build plate 2 comprises attaching 11b a pre-processed intermediate structure 3 on top of the build plate 2. The person skilled in the art will appreciate that the pre-processed intermediate structure can be attached to the build plate in any suitable way, for example by using at least one of a vacuum platen, a magnetic force, mechanical fastening elements such as form example clamps or screws or any suitable type of form-locks for that matter.

In accordance with a next step 12 of the flow diagram shown in figure 5, tracks of extruded feedstock material are printed on the pre-processed intermediate structure 3 that is attached on top of the build plate 2 to fabricate the 3D part 1 and at least one auxiliary structure 4 arranged around the 3D part 1.

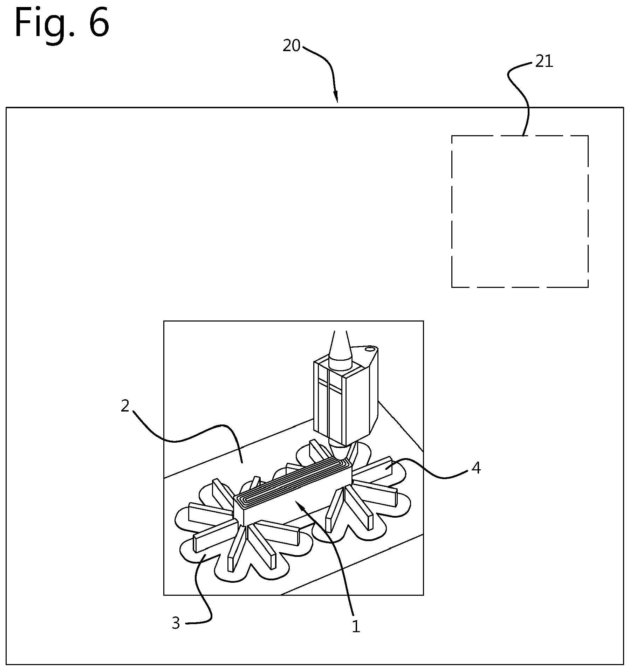

Figure 6 shows a schematic representation of an exemplary, non-limiting embodiment of a 3D printing system 20 according to the present invention. The 3D printing system 20 is operatively connected with a processing unit 21 that is provided with computer instructions which, if executed in the processing unit 21, perform the method 10 according to the invention to fabricate a 3D part 1 using an extrusion-based additive manufacturing process. The person skilled in the art will appreciate that the processing unit 21 of the 3D printing system 20 is operatively connected with all relevant parts of the 3D printing system 20 that are required to print the 3D part 1. In accordance with the exemplary, non-limiting embodiment of the 3D printing system 20 shown in figure 6 the processing unit 21 is integrated within the 3D printing system 20. In accordance with another exemplary, non-limiting embodiment of the 3D printing system 20, the processing unit 21 can also be located at a remote location with respect to the 3D printing system 20 as has been discussed above.

The present invention can be summarized as relating to a method 10 for preventing detachment of a 3D part 1 from a build plate 2 of a 3D printing system 20 for fabricating the 3D part 1 using an extrusion-based additive manufacturing process. The method 10 comprises providing an intermediate structure 3 on top of the build plate 2, the intermediate structure 3 having a surface that is larger than a print area required for printing the 3D part 1 on top of the intermediate structure 3, and printing tracks of extruded feedstock material to fabricate the 3D part 1 and at least one auxiliary structure 4 that is arranged next to the 3D part 1 for preventing detachment of the 3D part 1 from the build plate 2. The invention also relates to a 3D printing system 20 for performing the method 10 according to the invention, and a 3D part 1 fabricated using an extrusion-based additive manufacturing process performed by said 3D printing system 20.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

### REFERENCE NUMERALS

- 1: 3D part
- 2: build plate
- 3: intermediate structure
- 4: auxiliary structure
- 5: center line of elongated auxiliary structure
- 6: edge of the intermediate structure
- 10: method
- 11a: printing intermediate structure on top of the build plate
- 11b: attaching intermediate structure on top of the build plate
- 12: printing 3D part and at least one auxiliary structure
- 20: 3D printing system
- 21: processing unit
- *d1*: first distance of elongated auxiliary structure from 3D part
- *d2*: second distance of elongated auxiliary structure from edge of intermediate structure
- *h*: height of auxiliary structure
- *w*: width of elongated auxiliary structure

## Claims

1. A method (10) for preventing detachment of a three-dimensional, 3D, part (1) from a build plate (2) of a 3D printing system (20) that is configured and arranged to fabricate the 3D part (1) using an extrusion-based additive manufacturing process, the method (10) comprising:
- providing (11a, 11b) an intermediate structure (3) on top of the build plate (2), the intermediate structure (3) being configured to have a surface that is larger than a print area that is required to print the 3D part (1) on top of the intermediate structure (3);
- printing (12) tracks of extruded feedstock material to fabricate the 3D part (1) and at least one auxiliary structure (4) that is arranged next to the 3D part (1) and configured to prevent detachment of the 3D part (1) from the build plate (2).

2. The method (10) according to claim 1, the method (10) comprising:
- printing a set of auxiliary structures (4) around the 3D part (1), wherein at least one auxiliary structure (4) of said set has an elongated shape and a longitudinal center line (5), the at least one elongated auxiliary structure being arranged such that the longitudinal center line (5) is arranged at a non-zero angle with respect to an adjacent side surface of the 3D part (1).

3. The method (10) according to claim 2, the method (10) comprising:
- printing the at least one elongated auxiliary structure (4) of said set such that the at least one elongated auxiliary structure (4) is arranged at a respective predefined first distance, *d1,* from the 3D part (1) and at a respective predefined second distance, *d2,* from an edge (6) of the intermediate structure (3).

4. The method (10) according to claim 3, wherein the respective predefined first distance, *d1,* and the respective predefined second distance, *d2,* are non-zero.

5. The method (10) according to claim 3 or 4, wherein, if said set comprises more than one elongated auxiliary structure (4), at least one of the respective predefined first distance, *d1,* and the respective predefined second distance, *d2,* regarding at least one of the elongated auxiliary structures (4) of said set is different from at least one of the respective predefined first distances and the respective predefined second distances regarding at least one other elongated auxiliary structure of said set.

6. The method (10) according to any one of the claims 1 to 5, wherein the at least one auxiliary structure (4) has a height, *h,* in a range from 10mm to 25mm.

7. The method (10) according to any one of the claims 2 to 6, wherein the at least one elongated auxiliary structure (4) of said set has a dimension, *w,* in a direction perpendicular to the longitudinal center line (5) and parallel to the build plate (2) that is in a range from 2mm to 10mm.

8. The method (10) according to any one of the claims 1 to 7, wherein providing an intermediate structure (3) on top of the build plate (2) comprises:
- printing (11a) tracks of extruded feedstock material to fabricate the intermediate structure (3) on top of the build plate (2).

9. The method (10) according to any one of the claims 1 to 7, wherein providing an intermediate structure (3) on top of the build plate (2) comprises:
- attaching (11b) a pre-processed intermediate structure (3) on top of the build plate (2).

10. The method (10) according to any one of the claims 1 to 9, wherein the at least one auxiliary structure (4) has an open or closed shape.

11. The method (10) according to any one of the claims 1 to 10, wherein the at least one auxiliary structure (4) is either one of a completely solid structure, a hollow structure or a structure provided with a predefined filling pattern.

12. A 3D printing system (20) that is configured and arranged to fabricate a 3D part (1) using an extrusion-based additive manufacturing process, the 3D printing system (20) being operatively connected with a processing unit (21) that is provided with computer instructions which, if executed in the processing unit (21), perform the method (10) according to any one of the claims 1 to 11.

13. The 3D printing system (20) according to claim 12, wherein the processing unit (21) is integrated within the 3D printing system (20).

14. A 3D part (1) that is fabricated using an extrusion-based additive manufacturing process that is performed using a 3D printing system (20) according to claim 12 or 13.
